# EUROPÄISCHE PATENTANMELDUNG

(11) **EP 2 813 778 A1**
(43) Veröffentlichungstag der Anmeldung: **17.12.2014**
(21) Anmeldenummer: 14171691.0
(22) Anmeldetag: 10.06.2014
(51) Int. Cl.: F24H 8/00, F24D 12/02

(54) **Wärmeübertragervorrichtung**

(30) Priorität: 10.06.2013 DE 102013210754
(71) Anmelder: ROBERT BOSCH GMBH, 70442 Stuttgart (DE)
(72) Erfinder: Afonso, Alexandre, 4000-268 Porto (PT); Marques, Marco, 3810-474 Aveiro (PT); Monteiro, Luis, 3810-474 Aveiro (PT); Santos, Victor, 3870-166 Murtosa (PT)

(57) **Zusammenfassung**

Die Erfindung geht aus von einer Wärmeübertragervorrichtung, insbesondere Sekundärwärmeübertragervorrichtung, für Heiz- und/oder Warmwasservorrichtungen, mit zumindest einer Wärmeübertragereinheit (14), die zumindest ein an einem Flüssigkeitsleitungselement (16) anordenbares Wärmeübertragerelement (18, 20) zumindest zu einer Kondensation eines mit dem Wärmeübertragerelement (18, 20) in Kontakt kommenden Fluides und zumindest einen Kondensatauffangbereich (22) umfasst.

Es wird vorgeschlagen, dass das Wärmeübertragerelement (18, 20) zumindest teilweise den Kondensatauffangbereich (22) bildet.

## Beschreibung

### Stand der Technik

Aus der WO 2009/082090 A1 ist bereits eine Wärmeübertragervorrichtung bekannt, die eine Wärmeübertragereinheit umfasst, welche ein an einem Flüssigkeitsleitungselement anordenbares Wärmeübertragerelement zu einer Kondensation eines mit dem Wärmeübertragerelement in Kontakt kommenden Fluides und einen Kondensatauffangbereich umfasst. Der Kondensatauffangbereich ist hierbei von einer separat zum Wärmeübertragerelement ausgebildeten Gehäuseeinheit der Wärmeübertragervorrichtung gebildet und ist unterhalb des Wärmeübertragerelements angeordnet.

Ferner ist aus der US 6,907,846 B2 ebenfalls eine Wärmeübertragervorrichtung bekannt, die eine Wärmeübertragereinheit umfasst, welche ein an einem Flüssigkeitsleitungselement anordenbares Wärmeübertragerelement zu einer Kondensation eines mit dem Wärmeübertragerelement in Kontakt kommenden Fluides und einen Kondensatauffangbereich umfasst. Der Kondensatauffangbereich ist hierbei von einer separat zum Wärmeübertragerelement ausgebildeten Gehäuseeinheit der Wärmeübertragervorrichtung gebildet und ist unterhalb des Wärmeübertragerelements angeordnet.

Zudem ist aus der US 7,878,158 B2 ebenso eine Wärmeübertragervorrichtung bekannt, die eine Wärmeübertragereinheit umfasst, welche ein an einem Flüssigkeitsleitungselement anordenbares Wärmeübertragerelement zu einer Kondensation eines mit dem Wärmeübertragerelement in Kontakt kommenden Fluides und einen Kondensatauffangbereich umfasst.

### Offenbarung der Erfindung

Die Erfindung geht aus von einer Wärmeübertragervorrichtung, insbesondere von einer Sekundärwärmeübertragervorrichtung, für Heiz- und/oder Warmwasservorrichtungen, mit zumindest einer Wärmeübertragereinheit, die zumindest ein an einem Flüssigkeitsleitungselement anordenbares Wärmeübertragerelement zumindest zu einer Kondensation eines mit dem Wärmeübertragerelement in Kontakt kommenden Fluides und zumindest einen Kondensatauffangbereich umfasst.

Es wird vorgeschlagen, dass das Wärmeübertragerelement zumindest teilweise den Kondensatauffangbereich bildet. Die Wärmeübertragervorrichtung ist vorzugsweise dazu vorgesehen, latente Wärme eines Abgasstroms einer Brennereinheit einer Heiz- und/oder Warmwasservorrichtung zu einer Erwärmung eines im Flüssigkeitsleitungselement befindlichen Fluides zu nutzen. Hierzu wird die Wärmeübertragervorrichtung bevorzugt vom Abgasstrom durchströmt, wobei insbesondere Wasserdampf des Abgasstroms an dem Wärmeübertragerelement kondensiert. Hierdurch wird insbesondere auf eine, einem Fachmann bereits bekannte Art und Weise ein im Flüssigkeitsleitungselement befindliches Fluid erwärmt. Unter "vorgesehen" soll insbesondere speziell ausgelegt und/oder speziell ausgestattet verstanden werden. Darunter, dass ein Objekt und/oder eine Vorrichtung zu einer bestimmten Funktion vorgesehen ist, soll insbesondere verstanden werden, dass das Objekt und/oder die Vorrichtung diese bestimmte Funktion in zumindest einem Anwendungs- und/oder Betriebszustand erfüllt und/oder ausführt. Das Flüssigkeitsleitungselement ist vorzugsweise als Rohr ausgebildet. Bevorzugt weist das Flüssigkeitsleitungselement einen kreisringartigen Querschnitt auf. Es ist jedoch auch denkbar, dass das Flüssigkeitsleitungselement einen anderen, einem Fachmann als sinnvoll erscheinenden Querschnitt aufweist, wie beispielsweise einen polygonalen Querschnitt usw.

Der Begriff "Wärmeübertragereinheit" soll hier insbesondere eine Einheit definieren, die dazu vorgesehen ist, thermische Energie von einem Stoffstrom auf einen weiteren Stoffstrom zu übertragen. Hierbei sind der Stoffstrom und der weitere Stoffstrom vorzugsweise räumlich voneinander getrennt, insbesondere mittels des Flüssigkeitsleitungselements. Hierzu umfasst die Wärmeübertragereinheit bevorzugt zumindest das Flüssigkeitsleitungselement. Zusätzlich umfasst die Wärmeübertragereinheit zumindest das am Flüssigkeitsleitungselement anordenbare Wärmeübertragerelement zumindest zu einer Kondensation eines mit dem Wärmeübertragerelement in Kontakt kommenden Fluides und zumindest den Kondensatauffangbereich. Das Wärmeübertragerelement ist besonders bevorzugt fest mit dem Flüssigkeitsleitungselement verbunden. Vorzugsweise ist das Wärmeübertragerelement mittels einer stoffschlüssigen Verbindung, wie beispielsweise mittels einer Schweißverbindung, mit dem Flüssigkeitsleitungselement verbunden. Es ist jedoch auch denkbar, dass das Wärmeübertragerelement mittels einer anderen, einem Fachmann als sinnvoll erscheinenden Verbindung mit dem Flüssigkeitsleitungselement verbunden ist, wie beispielsweise mittels einer speziellen thermisch leitfähigen Klebeverbindung usw. Vorzugsweise ist das Wärmeübertragerelement dazu vorgesehen, eine große Oberfläche zur Kondensation des mit dem Wärmeübertragerelement in Kontakt kommenden Fluides, insbesondere eines Wasserdampfs im Abgasstrom, zur Verfügung zu stellen. Somit strömt das mit dem Wärmeübertragerelement in Kontakt kommende Fluid bevorzugt an zumindest einer Wandfläche des Wärmeübertragerelements vorbei. Besonders bevorzugt umfasst das Wärmeübertragerelement zumindest ein Strömungsleitelement, das dazu vorgesehen ist, eine turbulente Strömung des mit dem Wärmeübertragerelement in Kontakt kommenden Fluides während eines Vorbeiströmens am Wärmeübertragerelement und/oder während eines Durchströmens des Wärmeübertragerelements zu erzeugen. Vorzugsweise ist das Strömungsleitelement in einem Einströmbereich des Wärmeübertragerelements, in dem der Abgasstrom in das Wärmeübertragerelement bzw. in die Wärmeübertragervorrichtung einströmt, angeordnet. Bevorzugt ist das Strömungsleitelement dazu vorgesehen, den einströmenden Abgasstrom gezielt auf das mit dem Wärmeübertragerelement verbundene Flüssigkeitsleitungselement zu leiten. Das Flüssigkeitsleitungselement erstreckt sich vorzugsweise zumindest in einem Teilbereich durch das Wärmeübertragerelement hindurch.

Unter einem "Kondensatauffangbereich" soll hier insbesondere ein Bereich des Wärmeübertragerelements verstanden werden, in dem sich ein aus Wasserdampf des Abgasstroms gebildetes Kondensat zumindest sammelt und/oder der insbesondere dazu vorgesehen ist, eine Ableitung des gesammelten Kondensats aus der Wärmeübertragervorrichtung zu ermöglichen. Besonders bevorzugt ist der Kondesatauffangbereich dazu vorgesehen, ein Abfließen und/oder ein Tropfen des aus Wasserdampf des Abgasstroms gebildeten Kondensats in eine Primärwärmeübertragervorrichtung und/oder in eine Brennereinheit der Heizund/oder Warmwasservorrichtung zu verhindern. Das Wärmeübertragungselement umfasst zu einer zumindest teilweisen Bildung des Kondensatauffangbereichs, vorzugsweise zumindest einen relativ zu einer Vertikalachse der Wärmeübertragervorrichtung bzw. des Wärmeübertragerelements geneigten Innenwandbereich auf. Der Begriff "Vertikalachse" soll hier insbesondere eine Achse der Wärmeübertragervorrichtung bzw. des Wärmeübertragerelements definieren, die zumindest im Wesentlichen senkrecht zu einer Untergrundfläche, wie beispielsweise einem Fußboden eines Raums, der unterhalb der Wärmeübertragervorrichtung bzw. der Heiz- und/oder Warmwasservorrichtung angeordnet ist, verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Wnkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung kann vorteilhaft eine kompakte Wärmeübertragervorrichtung realisiert werden. Es können vorteilhaft zusätzlich Bauteile zu einer Bildung eines Kondensatauffangbereichs eingespart werden. Somit können vorteilhaft Montageaufwand, Montagekosten und Bauraum eingespart werden.

Des Weiteren wird vorgeschlagen, dass die Wärmeübertragervorrichtung zumindest eine Gehäuseeinheit umfasst, die zumindest eine Gehäusewand aufweist, die zumindest teilweise von dem Wärmeübertragerelement gebildet wird. Unter einer "Gehäuseeinheit" soll hier insbesondere eine Einheit verstanden werden, die Lagerkräfte von Elementen abstützt und/oder die Elemente schützend umgibt. Insbesondere umschließt die Gehäuseeinheit zumindest einen Bereich bzw. einen Raum in dem eine Kondensation stattfindet und/oder in dem eine Wärmeübertragung zwischen dem mit dem Wärmeübertragerelement in Kontakt kommenden Fluid und dem Wärmeübertragerelement bzw. dem im Flüssigkeits-leitungselement angeordneten Fluid stattfindet. Besonders bevorzugt bildet zumindest ein Teilbereich des Wärmeübertragerelements zumindest eine als Außenwand ausgebildete Gehäusewand der Gehäuseeinheit. Somit kann vorteilhaft auf zusätzlich Bauteile zur Bildung der Gehäuseeinheit verzichtet werden. Es können vorteilhaft Material und Montageaufwand eingespart werden.

Ferner wird vorgeschlagen, dass die Wärmeübertragervorrichtung zumindest die Gehäuseeinheit umfasst, die zumindest teilweise infolge einer Verbindung von zumindest zwei Wärmeübertragerelementen der Wärmeübertragereinheit gebildet wird. Hierzu werden die zumindest zwei Wärmeübertragerelemente vorzugsweise mittels einer stoffschlüssigen Verbindung miteinander verbunden. Besonders bevorzugt werden die zumindest zwei Wärmeübertragerelemente mittels einer Schweißverbindung stoffschlüssig miteinander verbunden, insbesondere flüssigkeitsdicht miteinander verbunden. Es ist jedoch auch denkbar, dass die zumindest zwei Wärmeübertragerelemente mittels einer anderen, einem Fachmann als sinnvoll erscheinenden Verbindung, wie beispielsweise mittels einer formschlüssigen und/oder kraftschlüssigen Verbindung, miteinander verbunden sind, insbesondere flüssigkeitsdicht miteinander verbunden sind. Insgesamt weist die Wärmeübertragevorrichtung eine Vielzahl an Wärmeübertragerelementen auf, die jeweils mit zumindest einem direkt benachbarten Wärmeübertragerelement stoffschlüssig miteinander verbunden sind. Ein Fachmann wird je nach Anwendungsfall bzw. je nach Platzangebot eine geeignete Anzahl an Wärmeübertragerelementen vorsehen. Besonders bevorzugt wird infolge einer Verbindung der zumindest zwei Wärmeübertragerelemente der Wärmeübertragereinheit zumindest ein Kondensatauffangraum gebildet. Der Kondensatauffangraum ist vorzugsweise dazu vorgesehen, das aus Wasserdampf des Abgasstroms gebildete Kondensat zumindest zu sammeln und/oder eine Ableitung des gesammelten Kondensats aus der Wärmeübertragervorrichtung zu ermöglichen. Mittels der erfindungsgemäßen Ausgestaltung kann vorteilhaft eine kompakte Wärmeübertragervorrichtung erreicht werden. Es kann zudem vorteilhaft eine flexible Ausgestaltung ermöglicht werden, die vorteilhaft an verschiedene Platzangebote anpassbar ist.

Zudem wird vorgeschlagen, dass das Wärmeübertragerelement zumindest eine Flüssigkeitsleitungsaufnahmeausnehmung aufweist, in der zumindest das Flüssigkeitsleitungselement anordenbar ist. Bevorzugt weist die Flüssigkeitsleitungsaufnahmeausnehmung eine mit einer Außengeometrie des Flüssigkeitsleitungselements korrespondierende Ausgestaltung auf. Besonders bevorzugt weist die Flüssigkeitsleitungsaufnahmeausnehmung eine kreisförmige Ausgestaltung auf. Es ist jedoch auch denkbar, dass die Flüssigkeitsleitungsaufnahmeausnehmung eine andere, einem Fachmann als sinnvoll erscheinende Ausgestaltung aufweist, wie beispielsweise eine polygonale Ausgestaltung. Vorzugsweise umfasst das Wärmeübertragerelement in einem die Flüssigkeitsleitungsaufnahmeausnehmung begrenzenden Randbereich zumindest eine Stoffschlussverbindungsausnehmung zu einer Anbringung eines Stoffschlussmittels zu einer stoffschlüssigen Verbindung zwischen dem durch die Flüssigkeitsleitungsaufnahmeausnehmung hindurch geführten Flüssigkeitsleitungselement und dem Wärmeübertragerelement. Mittels der erfindungsgemäßen Ausgestaltung der Wärmeübertragervorrichtung kann vorteilhaft eine konstruktiv einfache Anbringung des Wärmeübertragerelements am Flüssigkeitsleitungselement angeordnet werden. Zudem kann somit eine komfortable Montage des Wärmeübertragerelements am Flüssigkeitsleitungselement erreicht werden.

Des Weiteren wird vorgeschlagen, dass das Wärmeübertragerelement zumindest in einem montierten Zustand zumindest teilweise einen U-förmigen Fluidleitungskanal zu einem Durchlass des Fluides bildet. Insbesondere bildet das Wärmeübertragerelement zusammen mit zumindest einem weiteren Wärmeübertragerelement der Wärmeübertragereinheit einen relativ zur Vertikalachse verkippten U-förmigen Fluidleitungskanal zu einem Durchlass des Fluides. Es ist jedoch auch denkbar, dass das Wärmeübertragerelement zumindest in einem montierten Zustand zumindest teilweise einen Fluidleitungskanal zu einem Durchlass des Fluides bildet, der eine andere, einem Fachmann als sinnvoll erscheinende Form aufweist, wie beispielsweise mäanderförmig, S-förmig usw. Mittels der erfindungsgemäßen Ausgestaltung kann vorteilhaft eine hohe Effektivität hinsichtlich einer Kondensation des Wasserdampfs des Abgasstroms erreicht werden. Zudem kann vorteilhaft eine große Kondensationsfläche des Wärmeübertragerelements ermöglicht werden.

Ferner wird vorgeschlagen, dass das Wärmeübertragerelement zumindest ein Ablaufverbindungselement zu einem Anschluss eines Ablaufleitungselements oder zu einer Verbindung mit einem Kondensatauffangbereich eines weiteren Wärmeübertragerelements der Wärmeübertragereinheit aufweist. Hierdurch kann konstruktiv einfach ein vorteilhaftes Abfließen des Kondensats ermöglicht werden.

Zudem wird vorgeschlagen, dass das Wärmeübertragerelement aus einem Kupferwerkstoff gebildet wird. Der Kupferwerkstoff kann hierbei eine Kupferlegierung oder reines Kupfer sein. Besonders bevorzugt ist das Wärmeübertragerelement hierbei aus Kupfer gebildet. Zudem weist das Wärmeübertragerelement vorzugsweise eine Sol-Gel Beschichtung auf. Mittels der erfindungsgemäßen Ausgestaltung kann vorteilhaft eine hohe Wärmeleitfähigkeit ermöglicht werden. Zudem kann infolge der Beschichtung eine hohe Wderstandsfähigkeit gegen Korrosion ermöglicht werden.

Des Weiteren wird vorgeschlagen, dass das Wärmeübertragerelement rippenartig ausgebildet ist. Unter "rippenartig" soll hier insbesondere eine geometrische Ausgestaltung des Wärmeübertragerelements verstanden werden, bei der eine Bauteilstärke um ein Vielfaches geringer ist als eine zumindest im Wesentlichen senkrecht zur Bauteilstärke gemessene Längs- und/oder Quererstreckung. Bevorzugt ist das Wärmeübertragerelement hierbei aus einem Kupferblech gebildet. Mittels der erfindungsgemäßen Ausgestaltung kann vorteilhaft eine große Oberfläche zu einer Wärmeübertragung ermöglicht werden.

Ferner geht die Erfindung aus von einem Wärmeübertragerelement der erfindungsgemäßen Wärmeübertragervorrichtung. Somit kann vorteilhaft eine einfache Nachrüstbarkeit einer bereits bestehenden Wärmeübertragervorrichtung ermöglicht werden und/oder eine Austauschmöglichkeit von einzelnen Wärmeübertragerelementen bei einer bereits bestehenden Wärmeübertragervorrichtung ermöglicht werden.

Zudem geht die Erfindung aus von einer Heiz- und/oder Warmwasservorrichtung mit zumindest einer erfindungsgemäßen Wärmeübertragervorrichtung. Die Heiz- und/oder Warmwasservorrichtung kann hierbei als Warmwassertherme, als Zentralheizungsvorrichtung (Zentralheizungsboiler usw.), als Gas-Brennwertkesselvorrichtung, als Aufwärts- Brennwertkesselvorrichtung oder als andere, einem Fachmann als sinnvoll erscheinenden Heiz- und/oder Warmwasservorrichtung, die eine Wärmeübertragervorrichtung zu einer Nutzung latenter Wärme aufweist, ausgebildet sein. Mittels der erfindungsgemäßen Ausgestaltung kann vorteilhaft eine kompakte Heiz- und/oder Warmwasservorrichtung realisiert werden. Somit kann vorteilhaft eine einbauraumsparende Heiz- und/oder Warmwasservorrichtung realisiert werden, die eine hohe Heizleistung aufweist.

Die erfindungsgemäße Wärmeübertragervorrichtung, das erfindungsgemäße Wärmeübertragerelement und/oder die erfindungsgemäße Heiz- und/oder Warmwasservorrichtung soll/sollen hierbei nicht auf die oben beschriebene Anwendung und Ausführungsform beschränkt sein. Insbesondere können/kann die erfindungsgemäße Wärmeübertragervorrichtung, das erfindungsgemäße Wärmeübertragerelement und/oder die erfindungsgemäße Heiz- und/oder Warmwasservorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsdarstellung einer erfindungsgemäßen Heiz- und/oder Warmwasservorrichtung mit einer erfindungsgemäßen Wärmeübertragervorrichtung in einer schematischen Darstellung,
- Fig. 2: eine Detailansicht der erfindungsgemäßen Wärmeübertragervorrichtung in einer schematischen Darstellung,
- Fig. 3: eine Detailansicht miteinander verbundener erfindungsgemäßer Wärmeübertragerelemente der erfindungsgemäßen Wärmeübertragervorrichtung in einer schematischen Darstellung,
- Fig. 4: eine Detailansicht eines einzelnen erfindungsgemäßen Wärmeübertragerelements der erfindungsgemäßen Wärmeübertragervorrichtung in einer schematischen Darstellung und
- Fig. 5: eine weitere Detailansicht des einzelnen erfindungsgemäßen Wärmeübertragerelements der erfindungsgemäßen Wärmeübertragervorrichtung in einer schematischen Darstellung.

### Beschreibung des Ausführungsbeispiels

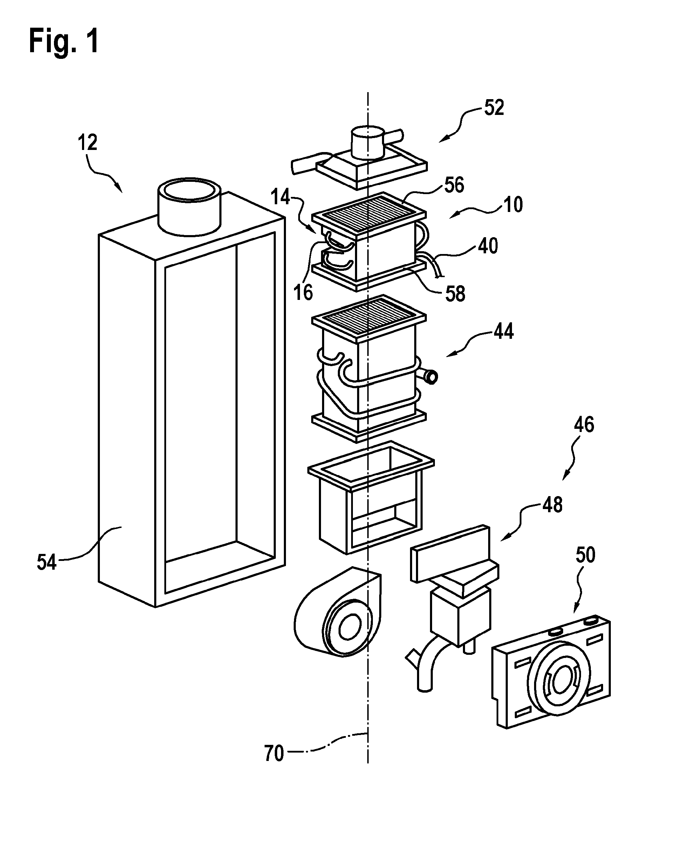

Figur 1 zeigt eine Heiz- und/oder Warmwasservorrichtung 12 mit zumindest einer Wärmeübertragervorrichtung 10. Die Wärmeübertragervorrichtung 10 bildet eine Sekundärwärmeübertragervorrichtung der Heiz- und/oder Warmwasservorrichtung 12. Zusätzlich zur Wärmeübertragervorrichtung 10 weist die Heiz- und/oder Warmwasservorrichtung 12 eine Primärwärmeübertragervorrichtung 44 auf. Zudem umfasst die Heiz- und/oder Warmwasservorrichtung 12 eine Brennervorrichtung 46. Die Brennervorrichtung 46 ist als Gasbrennervorrichtung ausgebildet. Hierbei umfasst die Brennervorrichtung 46 zumindest eine Brennereinheit 48 zur Erzeugung einer Flamme und zumindest eine Bedieneinheit 50 zu einer Bedienung der Brennereinheit 48. Somit weist die Brennervorrichtung 46 eine, einem Fachmann bereits bekannte Ausgestaltung auf. Mittels der Brennervorrichtung 46 wird eine durch die Primärwärmeübertragervorrichtung 44 geleitete Flüssigkeit, insbesondere Wasser, auf eine, einem Fachmann bereits bekannte Art und Weise erwärmt. Ein durch die Erwärmung der Flüssigkeit mittels der Brennereinheit 48 erzeugter Abgasstrom bzw. erzeugtes Abgas wird hierbei zu einer Latentwärmenutzung auf eine, einem Fachmann bereits bekannte Art und Weise durch die Wärmeübertragervorrichtung 10 geleitet. Somit ist die Wärmeübertragervorrichtung 10, betrachtet entlang des Abgasstroms, zwischen der Primärwärmeübertragervorrichtung 44 und einer Abgassammel- und/oder Abgasableitungseinheit 52 der Heiz- und/oder Warmwasservorrichtung 12 angeordnet. Die Brennervorrichtung 46, die Primärwärmeübertragervorrichtung 44, die Wärmeübertragervorrichtung 10 und die Abgassammel- und/oder Abgasableitungseinheit 52 sind in einem montierten Zustand der Heiz- und/oder Warmwasservorrichtung 12 zusammen in einer Gehäuseeinheit 54 der Heiz- und/oder Warmwasservorrichtung 12 angeordnet. Eine Funktion der Heiz- und/oder Warmwasservorrichtung 12 erfolgt auf eine, einem Fachmann bereits bekannte Art und Weise. Somit wird im nachfolgenden lediglich auf die Unterschiede der Wärmeübertragervorrichtung 10 im Vergleich zu bereits bekannten Wärmeübertragervorrichtungen aus dem Stand der Technik eingegangen.

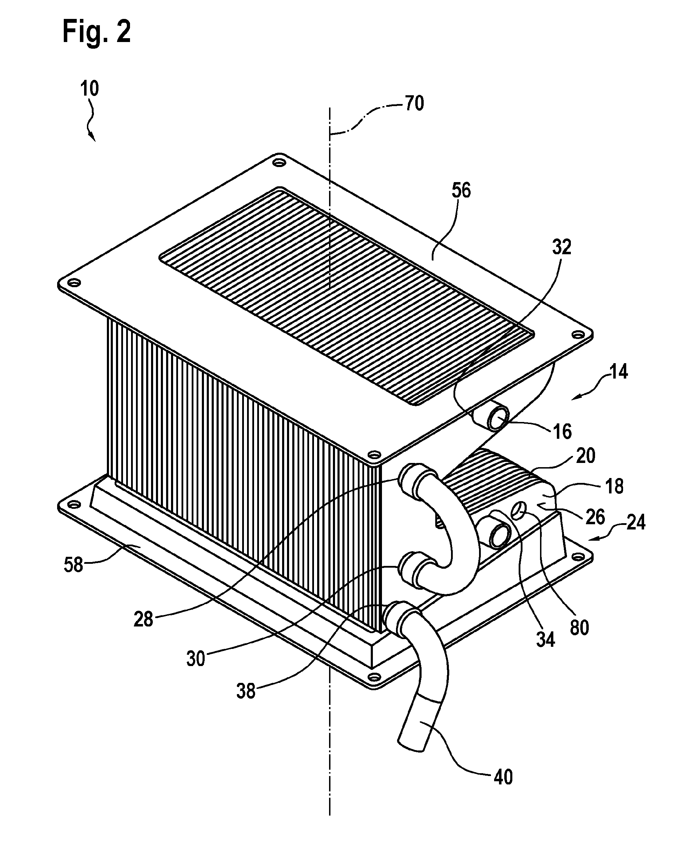

Figur 2 zeigt eine Detailansicht der Wärmeübertragervorrichtung 10 in einem von der Gehäuseeinheit 54 der Heiz- und/oder Warmwasservorrichtung 12 demontierten Zustand. Die Wärmeübertragervorrichtung 10 der Heiz- und/oder Warmwasservorrichtung 12 umfasst zumindest eine Wärmeübertragereinheit 14, die zumindest ein an einem Flüssigkeitsleitungselement 16 anordenbares Wärmeübertragerelement 18 zumindest zu einer Kondensation eines mit dem Wärmeübertragerelement 18 in Kontakt kommenden Fluides aufweist. Das Fluid wird hierbei von einem Abgas der Brennervorrichtung 46 gebildet. Insgesamt weist die Wärmeübertragereinheit 14 eine Vielzahl an Wärmeübertragerelementen 18, 20 auf, die an dem Flüssigkeitsleitungselement 16 anordenbar sind. Ein Fachmann, wird je nach Anwendungsfall der Wärmeübertragervorrichtung 10 und/oder je nach Platzangebot in der Gehäuseeinheit 54 der Heiz- und/oder Warmwasservorrichtung 12 eine geeignete Anzahl an Wärmeübertragerelementen 18, 20 auswählen. Die Wärmeübertragerelemente 18, 20 bilden in einem miteinander verbundenen Zustand eine Gehäuseeinheit 24 der Wärmeübertragervorrichtung 10. Somit wird die Gehäuseeinheit 24 der Wärmeübertragervorrichtung 10 zumindest teilweise infolge einer Verbindung von zumindest zwei Wärmeübertragerelementen 18, 20 der Wärmeübertragereinheit 14 gebildet. Hierdurch weist die Gehäuseeinheit 24 der Wärmeübertragervorrichtung 10 zumindest eine Gehäusewand 26 auf, die zumindest teilweise von zumindest einem der Wärmeübertragerelemente 18, 20 gebildet wird.

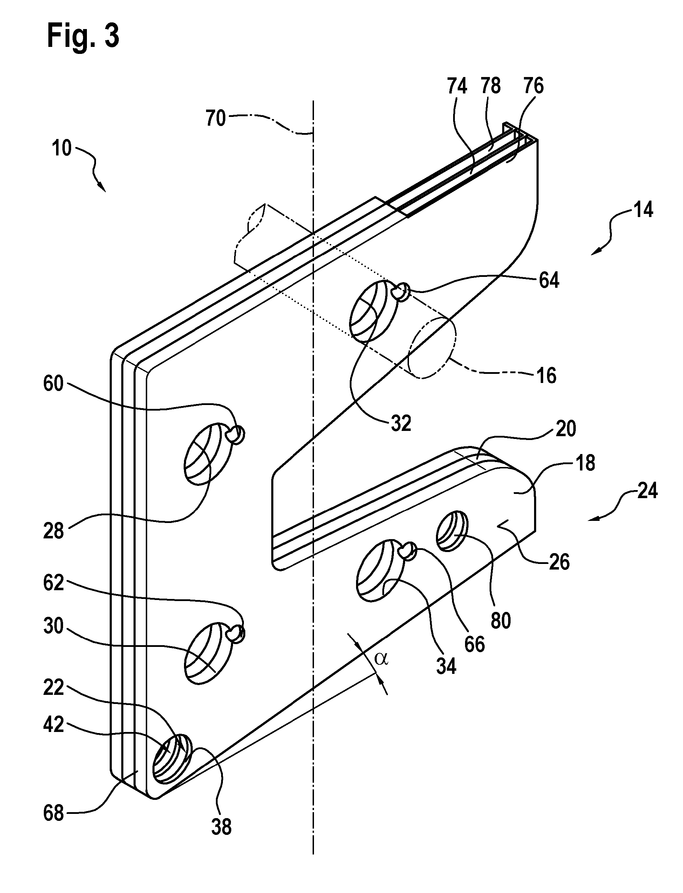

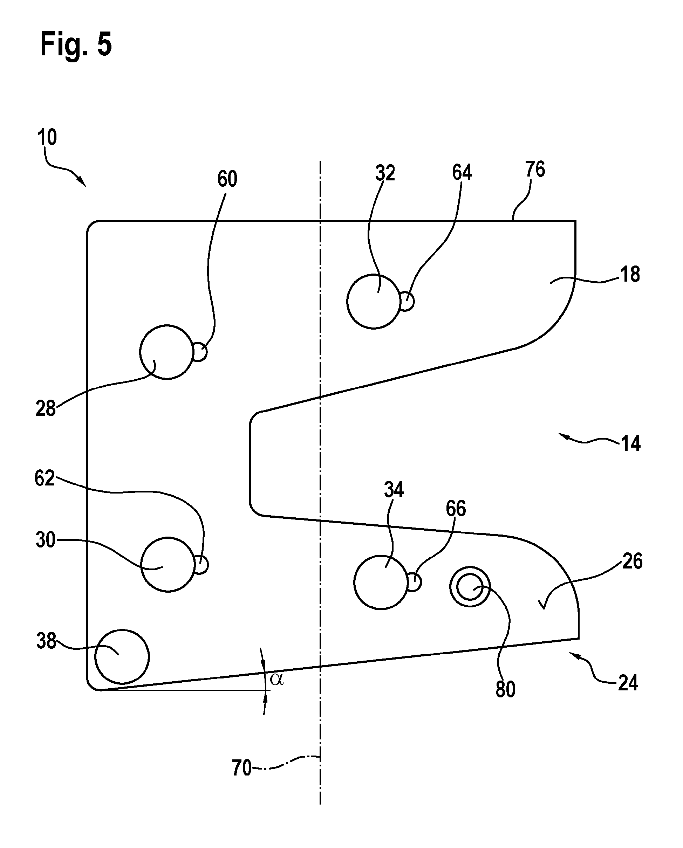

Die Wärmeübertragerelemente 18, 20 sind ferner fest mit dem Flüssigkeitsleitungselement 16 verbunden. Hierzu umfassen die Wärmeübertragerelemente 18, 20 jeweils zumindest eine Flüssigkeitsleitungsaufnahmeausnehmung 28, 30, 32, 34, in der zumindest das Flüssigkeitsleitungselement 16 anordenbar ist. Insgesamt weist jedes der Wärmeübertragerelemente 18, 20 der Wärmeübertragereinheit 14 zumindest vier Flüssigkeitsleitungsaufnahmeausnehmungen 28, 30, 32, 34 auf (vgl. Figuren 3 bis 5). Somit umfasst jedes einzelne Wärmeübertragerelement 18, 20 zumindest eine Flüssigkeitsleitungsaufnahmeausnehmung 28, 30, 32, 34, in der zumindest das Flüssigkeitsleitungselement 16 anordenbar ist. Die Flüssigkeitsleitungsaufnahmeausnehmungen 28, 30, 32, 34 weisen zur Aufnahme des Flüssigkeitsleitungselements 16 eine mit einer Außengeometrie des Flüssigkeitsleitungselements 16 korrespondierende Ausgestaltung auf. Die Wärmeübertragerelemente 18, 20 sind mittels einer stoffschlüssigen Verbindung, insbesondere mittels einer Schweißverbindung, fest mit dem Flüssigkeitsleitungselement 16 verbunden. Hierzu umfassen die Wärmeübertragerelemente 18, 20 jeweils in einem die jeweilige Flüssigkeitsleitungsaufnahmeausnehmung 28, 30, 32, 34 begrenzenden Randbereich zumindest eine Stoffschlussverbindungsausnehmung 60, 62, 64, 66 zu einer Anbringung eines Stoffschlussmittels, insbesondere eines Schweißmittels, zu einer stoffschlüssigen Verbindung zwischen dem durch die Flüssigkeitsleitungsaufnahmeausnehmungen 28, 30, 32, 34 hindurch geführten Flüssigkeitsleitungselement 16 und dem jeweiligen Wärmeübertragerelement 18, 20 auf (vgl. Figuren 3 bis 5). Das Flüssigkeitsleitungselement 16 erstreckt sich somit in einem montierten Zustand durch die Gehäuseeinheit 24 der Wärmeübertragervorrichtung 10 hindurch. Hierdurch kann eine Erwärmung der in dem Flüssigkeitsleitungselement 16 geführten Flüssigkeit infolge einer Nutzung einer latenten Wärme aus der Kondensation von Wasserdampf des Abgases bzw. des Abgasstroms erreicht werden. Das Flüssigkeitsleitungselement 16 ist als Flüssigkeitsleitungsrohr ausgebildet. Es ist jedoch auch denkbar, dass das Flüssigkeitsleitungselement 16 eine andere, einem Fachmann als sinnvoll erscheinende Ausgestaltung aufweist, wie beispielsweise eine Ausgestaltung als Schlauch, insbesondere als flexibler Schlauch usw.

Zu einer Anordnung bzw. zu einer Befestigung der Wärmeübertragervorrichtung 10 an der Gehäuseeinheit 54 der Heiz- und/oder Warmwasservorrichtung 12 und/oder zu einer Verbindung mit der Abgassammel- und/oder Abgasableitungseinheit 52 umfasst die Wärmeübertragervorrichtung 10 zumindest ein Tragrahmenelement 56. Das Tragrahmenelement 56 umgibt hierbei die Gehäuseeinheit 24 der Wärmeübertragervorrichtung 10 in einem Teilbereich entlang einer Umfangsrichtung, insbesondere vollständig. Somit werden die Wärmeübertragerelemente 18, 20, die in einem miteinander verbundenen Zustand die Gehäuseeinheit 24 der Wärmeübertragervorrichtung 10 bilden, ebenfalls von dem Tragrahmenelement 56 entlang der Umfangsrichtung umgeben. Ferner umfasst die Wärmeübertragervorrichtung 10 zumindest ein weiteres Tragrahmenelement 58, das zu einer Anordnung bzw. zu einer Befestigung der Wärmeübertragervorrichtung 10 an der Gehäuseeinheit 54 der Heiz- und/oder Warmwasservorrichtung 12 und/oder zu einer Verbindung mit der Primärwärmeübertragervorrichtung 44 an der Gehäuseeinheit 24 der Wärmeübertragervorrichtung 10 angeordnet ist. Das Tragrahmenelement 56 und das weitere Tragrahmenelement 58 weisen jeweils zumindest eine Befestigungselementaufnahme 60, 62 auf, die jeweils zu einer Aufnahme zumindest eines Befestigungselements (hier nicht näher dargestellt) der Heiz- und/oder Wärmevorrichtung 12 vorgesehen ist. Das Befestigungselement kann hierbei beispielsweise als Schraube o. dgl. ausgebildet sein.

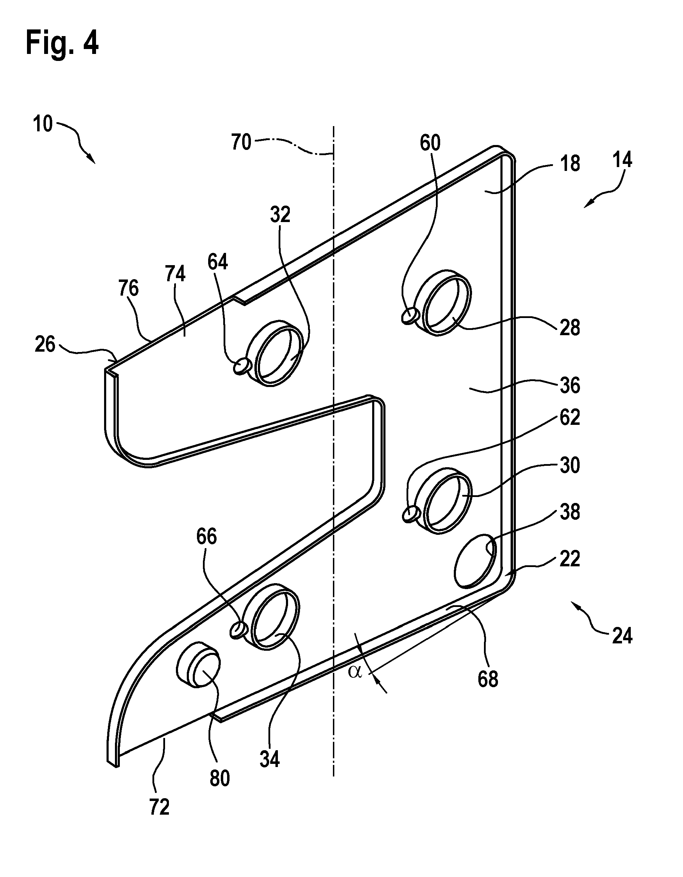

Ferner umfasst die Wärmeübertragereinheit 14 zumindest einen Kondensatauffangbereich 22. Hierbei bildet das Wärmeübertragerelement 18 zumindest teilweise den Kondensatauffangbereich 22. Hierzu weist das Wärmeübertragerelement 18 zumindest eine Querwandung 68 auf (vgl. Figur 4). Die Querwandung 68 erstreckt sich, betrachtet in einem mit dem Wärmeübertragerelement 18 verbundenen Zustand des Flüssigkeitsleitungselements 16, zumindest im Wesentlichen parallel zu einer Haupterstreckungsrichtung des Flüssigkeitsleitungselements 16. Ferner erstreckt sich die Querwandung 68, betrachtet in einem mit dem Wärmeübertragerelement 18 verbundenen Zustand des Flüssigkeitsleitungselements 16, zumindest im Wesentlichen quer zur Haupterstreckungsrichtung des Flüssigkeitsleitungselements 16, wobei die Querwandung 68 zumindest in einem Teilbereich zur zumindest teilweisen Bildung des Kondensatauffangbereichs 22 relativ zu einer Vertikalachse 70 der Wärmeübertragervorrichtung 10 bzw. des Wärmeübertragerelements 18 geneigt ist. Der Teilbereich der Querwandung 68, der zumindest teilweise den Kondensatauffangbereich 22 bildet, ist in einem in der Gehäuseeinheit 54 der Heiz- und/oder Warmwasservorrichtung 12 angeordneten Zustand der Wärmeübertragervorrichtung 10 auf einer der Primärwärmeübertragervorrichtung 44 zugewandten Seite des Wärmeübertragerelements 18 angeordnet. Hierbei ist die Querwandung 68 in zumindest diesem Teilbereich um einen Winkel α, der größer ist als 3° oder 3° entspricht, relativ zu einer zumindest im Wesentlichen senkrecht zur Vertikalachse verlaufenden Achse geneigt. Somit bildet zumindest ein Teilbereich der Querwandung 68 einen relativ zur Vertikalachse 70 der Wärmeübertragervorrichtung 10 bzw. des Wärmeübertragerelements 18 geneigten Innenwandbereich des Wärmeübertragerelements 18. Der Innenwandbereich, der zumindest teilweise den Kondensatauffangbereich 22 bildet, ist dazu vorgesehen, Kondensat aus Wasserdampf des Abgases, das während eines Durchströmens des Abgases durch das Wärmeübertragerelement 18 bzw. durch die Wärmeübertragervorrichtung 10 infolge einer Kondensation des Wasserdampfs am Wärmeübertragerelement 18 bzw. am Flüssigkeitsleitungselement 16 gebildet wird, zu sammeln bzw. aufzufangen.

Alle Wärmeübertragerlemente 18, 20 der Wärmeübertragereinheit 14 weisen eine analoge Ausgestaltung auf. Somit wird infolge einer Verbindung der Wärmeübertragerelemente 18, 20 jeweils zwischen zwei Wärmeübertragerlemente 18, 20 zumindest ein Kondensatauffangraum gebildet. Der Kondensatauffangraum ist dazu vorgesehen, das aus Wasserdampf des Abgases gebildete Kondensat zumindest zu sammeln und/oder eine Ableitung des gesammelten Kondensats aus der Wärmeübertragervorrichtung 10 zu ermöglichen. Hierzu umfasst das Wärmeübertragerelement 18 zumindest ein Ablaufverbindungselement 38 zu einem Anschluss eines Ablaufleitungselements 40 der Wärmeübertragervorrichtung 10 oder zu einer Verbindung mit einem Kondensatauffangbereich 42 des weiteren Wärmeübertragerelements 20 der Wärmeübertragereinheit 14. Hierbei umfasst jedes der Wärmeübertragerelemente 18, 20 der Wärmeübertragereinheit 14 zumindest ein Ablaufverbindungselement 38. Das Ablaufverbindungselement 38 ist im Bereich des geneigten Teilbereichs der Querwandung 68 angeordnet. Hierbei ist das Ablaufverbindungselement 38 als Ablauföffnung ausgebildet, an die das Ablaufleitungselement 40 anschließbar ist bzw. die ein Abfließen des Kondensats aus dem Kondensatauffangbereich 22 bzw. dem Kondensatauffangraum ermöglicht. Zu einer Ermöglichung eines Durchströmens von Fluid, insbesondere von Abgas, durch die Wärmeübertragervorrichtung 10 bildet das Wärmeübertragerelement 18 zumindest in einem montierten Zustand zumindest teilweise einen U-förmigen Fluidleitungskanal 36 zu einem Durchlass des Fluides (vgl. Figur 4). Hierbei bilden jeweils zwei direkt miteinander verbundene Wärmeübertragerelemente 18, 20 der Wärmeübertragereinheit 14 jeweils einen U-förmigen Fluidleitungskanal 36 zu einem Durchlass des Fluides. Somit umfasst die Wärmeübertragereinheit 14 eine Vielzahl an Fluidleitungskanälen 36, wobei eine Anzahl an Fluidleitungskanälen 36 abhängig von einer Anzahl miteinander verbundener Wärmeübertragerelemente 18, 20 ist. Die U-förmige Ausgestaltung des Fluidleitungskanals 36 bzw. der Fluidleitungskanäle 36 ist hierbei in einem montierten Zustand der Wärmeübertragervorrichtung 10 relativ zur Vertikalachse 70 verkippt angeordnet. Somit ist jeweils ein Schenkel des U-förmigen Fluidleitungskanals 36 bzw. der Fluidleitungskanäle 36 auf der der Primärwärmeübertragervorrichtung 44 zugewandten Seite des jeweiligen Wärmeübertragerelements 18, 20 angeordnet. Eine Unterbrechung der Querwandung 68 auf der der Primärwärmeübertragervorrichtung 44 zugewandten Seite des jeweiligen Wärmeübertragerelements 18, 20 bildet eine Fluideintrittsöffnung 72, in die das als Abgas ausgebildete Fluid nach einem Durchströmen der Primärwärmeübertragervorrichtung 44 in den Fluidleitungskanal 36 einströmt. Eine Unterbrechung der Querwandung 68 auf einer der Primärwärmeübertragervorrichtung 44 abgewandten Seite des jeweiligen Wärmeübertragerelements 18, 20 bildet eine Fluidaustrittsöffnung 74, aus der das als Abgas ausgebildete Fluid nach einem Durchströmen der Wärmeübertragervorrichtung 10 aus dem Fluidleitungskanal 36 ausströmt. Nach einem Ausströmen des als Abgas ausgebildeten Fluides aus der Fluidaustrittsöffnung 74 strömt das als Abgas ausgebildete Fluid in die Abgassammel- und/oder Abgasableitungseinheit 52 ein.

Die Querwandung 68 begrenzt somit in einem miteinander verbundenen Zustand von zumindest zwei Wärmeübertragerelementen 18, 20 zusammen mit jeweils einer Längswandung 76, 78 des jeweiligen Wärmeübertragerelements 18, 20 den Fluidleitungskanal 36. In den Längswandungen 76, 78 der Wärmeübertragerelemente 18, 20 sind jeweils die Flüssigkeitsleitungsaufnahmeausnehmung 28, 30, 32, 34 und das als Ablauföffnung ausgebildete Ablaufverbindungselement 38 angeordnet. Zu einer Erzeugung einer turbulenten Strömung im Fluidleitungskanal 36 weisen die Wärmeübertragerelemente 18, 20 jeweils ein Strömungsleitelement 80 auf (vgl. Figur 4). Das Strömungsleitelement 80 ist an der Längswandung 76, 78 des jeweiligen Wärmeübertragerelements 18, 20 angeordnet. Die Längswandungen 76, 78 erstrecken sich jeweils zumindest im Wesentlichen quer zur Querwandung 68 des jeweiligen Wärmeübertragerelements 18, 20.

Die Wärmeübertragerelemente 18, 20 werden jeweils aus einem Kupferwerkstoff gebildet. Hierbei werden die Wärmeübertragerelemente 18, 20 insbesondere mittels eines Tiefziehverfahrens hergestellt. Es ist jedoch auch denkbar, dass die Wärmeübertragerelemente 18, 20 mittels eines anderen, einem Fachmann als sinnvoll erscheinenden Verfahren herstellbar sind. Zudem sind die Wärmeübertragerelemente 18, 20 jeweils rippenartig ausgebildet. Somit bilden die Wärmeübertragerelemente 18, 20 in einem verbundenen Zustand Kondensationsrippen, an denen Wasserdampf des Abgases während eines Durchströmens des Fluidleitungskanals 36 kondensieren kann. Zudem weisen die Wärmeübertragerelemente 18, 20 jeweils eine Sol-Gel-Beschichtung auf, um gegen Korrosion geschützt zu sein.

Zu einer Bildung der Gehäuseeinheit 24 werden die Wärmeübertragerelemente 18, 20 entlang der Querwandung 68 miteinander stoffschlüssig verbunden, insbesondere miteinander verschweißt.

## Patentansprüche

1. Wärmeübertragervorrichtung, insbesondere Sekundärwärmeübertragervorrichtung, für Heiz- und/oder Warmwasservorrichtungen, mit zumindest einer Wärmeübertragereinheit (14), die zumindest ein an einem Flüssigkeitsleitungselement (16) anordenbares Wärmeübertragerelement (18, 20) zumindest zu einer Kondensation eines mit dem Wärmeübertragerelement (18, 20) in Kontakt kommenden Fluides und zumindest einen Kondensatauffangbereich (22) umfasst, **dadurch gekennzeichnet, dass** das Wärmeübertragerelement (18, 20) zumindest teilweise den Kondensatauffangbereich (22) bildet.

2. Wärmeübertragervorrichtung nach Anspruch 1, **gekennzeichnet durch** zumindest eine Gehäuseeinheit (24), die zumindest eine Gehäusewand (26) aufweist, die zumindest teilweise von dem Wärmeübertragerelement (18, 20) gebildet wird.

3. Wärmeübertragervorrichtung nach einem der vorhergehenden Ansprüche, **gekennzeichnet durch** zumindest eine Gehäuseeinheit (24), die zumindest teilweise infolge einer Verbindung von zumindest zwei Wärmeübertragerelementen (18, 20) der Wärmeübertragereinheit (14) gebildet wird.

4. Wärmeübertragervorrichtung zumindest nach einem der vorhergehenden Ansprüche, **dadurch gekennzeichnet, dass** das Wärmeübertragerelement (18, 20) zumindest eine Flüssigkeitsleitungsaufnahmeausnehmung (28, 30, 32, 34) aufweist, in der zumindest das Flüssigkeitsleitungselement (16) anordenbar ist.

5. Wärmeübertragervorrichtung nach einem der vorhergehenden Ansprüche, **dadurch gekennzeichnet, dass** das Wärmeübertragerelement (18, 20) zumindest in einem montierten Zustand zumindest teilweise einen U-förmigen Fluidleitungskanal (36) zu einem Durchlass des Fluides bildet.

6. Wärmeübertragervorrichtung nach einem der vorhergehenden Ansprüche, **dadurch gekennzeichnet, dass** das Wärmeübertragerelement (18) zumindest ein Ablaufverbindungselement (38) zu einem Anschluss eines Ablaufleitungselements (40) oder zu einer Verbindung mit einem Kondensatauffangbereich (42) eines weiteren Wärmeübertragerelements (20) der Wärmeübertragereinheit (14) aufweist.

7. Wärmeübertragervorrichtung nach einem der vorhergehenden Ansprüche, **dadurch gekennzeichnet, dass** das Wärmeübertragerelement (18, 20) aus einem Kupferwerkstoff gebildet wird.

8. Wärmeübertragervorrichtung nach einem der vorhergehenden Ansprüche, **dadurch gekennzeichnet, dass** das Wärmeübertragerelement (18, 20) rippenartig ausgebildet ist.

9. Wärmeübertragerelement (18, 20) einer Wärmeübertragervorrichtung nach einem der vorhergehenden Ansprüche.

10. Heiz- und/oder Warmwasservorrichtung mit zumindest einer Wärmeübertragervorrichtung nach einem der Ansprüche 1 bis 8.
